# EUROPÄISCHE PATENTANMELDUNG

(11) **EP 3 291 412 A1**
(43) Veröffentlichungstag der Anmeldung: **07.03.2018**
(21) Anmeldenummer: 16186610.8
(22) Anmeldetag: 31.08.2016
(51) Int. Cl.: H02K 1/14

(54) **ELEKTROMAGNETISCHER PFAD EINES STATORS**

(71) Anmelder: Siemens Aktiengesellschaft, 80333 München (DE)
(72) Erfinder: Kuhn, Martin, 97708 Roth a. d. Saale (DE); Müller, Michael, 97688 Bad Kissingen (DE); Rettinger, Frank, 97616 Bad Neustadt (DE)

(57) **Zusammenfassung**

Die Erfindung betrifft einen elektromagnetischen Pfad eines Stators (2) einer dynamoelektrischen Maschine mit zumindest einem Statorzahn (4) und einem Statorjoch (3) mit Abschnitten unterschiedlicher magnetischer Leitfähigkeit.

## Beschreibung

Die Erfindung betrifft einen elektromagnetischen Pfad eines Stators einer dynamoelektrischen Maschine mit zumindest einem Statorzahn und einem Statorjoch.

Der Querschnitt eines Stators einer elektrodynamischen Maschine wird zwischen Nuten und einem magnetischen Pfad aufgeteilt. Die Nuten im Stator haben die Funktion, den Drähten oder Formstäben z.B. aus Kupfer oder Aluminium, also der Wicklung und den dazu notwendigen Isoliermaterialien Platz zu bieten. Der elektromagnetische Pfad in den Statorzähnen und dem Statorjoch soll den Fluss mit möglichst niedrigem elektromagnetischem Spannungsfall führen. Damit "konkurrieren" die Nuten und Statorzähne um den gleichen Platz.

Somit wird ein Statorschnitt je nach Anwendungsfall optimiert. Dabei werden Einbußen im Wirkungsgrad und/oder Strombedarf in Folge eines vergleichsweise niedrigen Leistungsfaktors in Kauf genommen.

Ausgehend davon liegt der Erfindung die Aufgabe zugrunde, einen Stator zu schaffen, der sowohl für die Wicklung ausreichend Platz bietet, aber ebenso einen möglichst geringen elektromagnetischen Spannungsfall aufweist. Des Weiteren soll damit eine dynamoelektrische Maschine bereitgestellt werden mit einem vergleichsweise hohen Leistungsfaktor. Außerdem soll ein Antrieb mit vergleichsweise hoher Leistungsdichte, insbesondere für Transportmittel geschaffen werden.

Die Lösung der gestellten Aufgabe gelingt durch einen elektromagnetischen Pfad eines Stators einer dynamoelektrischen Maschine mit zumindest einem Statorzahn und einem Statorjoch mit Abschnitten unterschiedlicher magnetischer Leitfähigkeit.

Die Lösung der gestellten Aufgabe gelingt auch durch eine dynamoelektrische Maschine mit einem erfindungsgemäßen Stator.

Die Lösung der gestellten Aufgabe gelingt insbesondere durch ein Transportmittel mit zumindest einer dynamoelektrischen Maschine, die zumindest einen erfindungsgemäßen Stator aufweist.

Durch unterschiedliche Materialien mit unterschiedlichen magnetischen Leitfähigkeiten kann nunmehr der Nutquerschnitt als auch der verfügbare Querschnitt in den einzelnen Statorzähnen ausgereizt werden. Dabei werden beispielsweise für zumindest einige Abschnitte eines oder mehrerer Statorzähne oder zumindest einen gesamten Statorzahn oder alle gesamten Statorzähne höchstpermeable Materialien mit vergleichsweise guter magnetischer Leitfähigkeit eingesetzt. Dies sind beispielsweise Eisenkobalt oder kornorientierte Bleche. Eine dynamoelektrische Maschine komplett mit derartigen Materialien auszugestalten wäre nicht wirtschaftlich und würde die dynamoelektrische Maschine unnötig verteuern.

Es werden somit diese Materialien nur in diejenigen Abschnitte des elektromagnetischen Pfades eines Stators eingesetzt, wo der elektromagnetische Spannungsfall auf jeden Fall reduziert werden soll.

Das bedeutet nunmehr, dass die klassischen Statorbleche in den Bereichen, in denen die Materialien mit vergleichsweise guter magnetischer Leitfähigkeit eingesetzt werden sollen, Ausnehmungen aufweisen, in die diese Materialien platziert werden. Dies sind insbesondere die Zähne oder Abschnitte der Zähne, wobei um zusätzlich Wirbelströme zu verhindern, die Abschnitte mit Materialien mit vergleichsweise schlechter magnetischer Leitfähigkeit und/oder die Abschnitte mit Materialien mit vergleichsweise guter magnetischer Leitfähigkeit geblecht ausgeführt sind.

Um den Effekt der Wirbelströme weiter zu unterdrücken sind die Blechstärken unterschiedlicher Materialien verschieden.

So weist beispielsweise ein Statorzahn Material vergleichsweise hoher magnetischer Leitfähigkeit auf, während das Statorjoch Material mit vergleichsweise geringer magnetischer Leitfähigkeit aufweist. Die Blechstärken in axialer Richtung sind dabei unterschiedlich.

Der erfindungsgemäße Gedanke kann nicht nur bei Blechpaketen sondern kann auch bei gesinterten Statoren eingesetzt werden, in dem beispielsweise die Pfade mit vergleichsweise schlechter magnetischer Leitfähigkeit verbessert werden durch Materialien, die eine vergleichsweise gute magnetisch Leitfähigkeit aufweisen.

Ebenso ist der erfinderische Gedanke auch auf Rotoren übertragbar.

Die Erfindung sowie weitere vorteilhafte Ausgestaltungen der Erfindung werden anhand folgender prinzipiell dargestellter Ausführungsbeispiele näher erläutert. Darin zeigen:
- FIG 1: einen Querschnitt einer dynamoelektrischen Maschine,
- FIG 2: einen Zahn mit Joch,
- FIG 3: einen Einsatz,
- FIG 4: ein Joch mit seinem Zahn,
- FIG 5 und 6: Ausführungsbeispiele des Einsatzes.

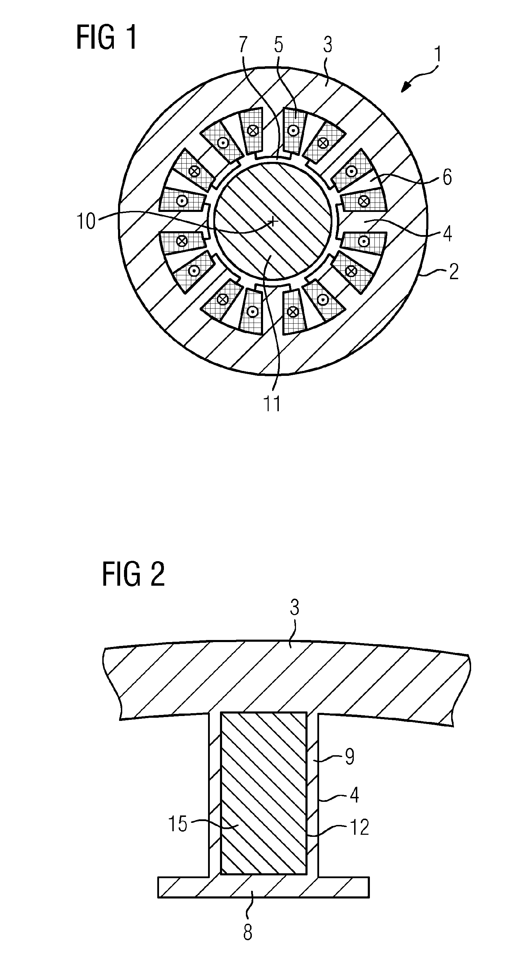

FIG 1 zeigt einen prinzipiellen Querschnitt einer rotatorischen dynamoelektrischen Maschine 1 mit einem Stator 2, der ein Joch 3 und Zähne 4 aufweist. Zwischen den Zähnen 4 befinden sich Nuten 6, in denen ein Wicklungssystem angeordnet ist. Dieses Wicklungssystem kann, wie in diesem Fall, aus Zahnspulen 5 bestehen, wobei jede Zahnspule 5 einen Zahn 4 umfasst. Ebenso ist es möglich, dass gesehnte Wicklungsformen einsetzbar sind.

Dabei liegen nunmehr in dieser Ausführung zwei Seiten unterschiedlicher Zahnspulen 5 in einer Nut 6. Damit sind sowohl zwischen den Seiten der Zahnspulen 4 als auch zwischen Zahnspule 4 und geerdeten Stator 2 Isolationsmaterialien vorzusehen, die den Nutquerschnitt für die Wicklung verringern.

Durch einen Luftspalt 7 vom Zahn 4 beabstandet, befindet sich ein Rotor 11, der als Reluktanzrotor oder Käfigläufer einer Asynchronmaschine oder auch als permanenterregter Rotor 11 ausgeführt sein kann.

FIG 2 zeigt nunmehr eine Detailansicht des Stators 2 mit einem Zahn 4, der eine Ausnehmung 12 aufweist, in der ein Einsatz 15 eingesetzt ist, mit einem Material mit vergleichsweise sehr guter magnetischer Leitfähigkeit. Die Ausnehmung 12 ist in diesem Fall in Umfangsrichtung geschlossen ausgeführt. Zum Luftspalt 7 hin wird der Zahn 4 aus elektromagnetischen Gründen breiter und bildet einen Zahnkopf 8. In dieser Ausführung befindet sich der Einsatz 15 nunmehr lediglich im Zahnschaft 9 und reicht weder in den Zahnkopf 8 noch in das Joch 3.

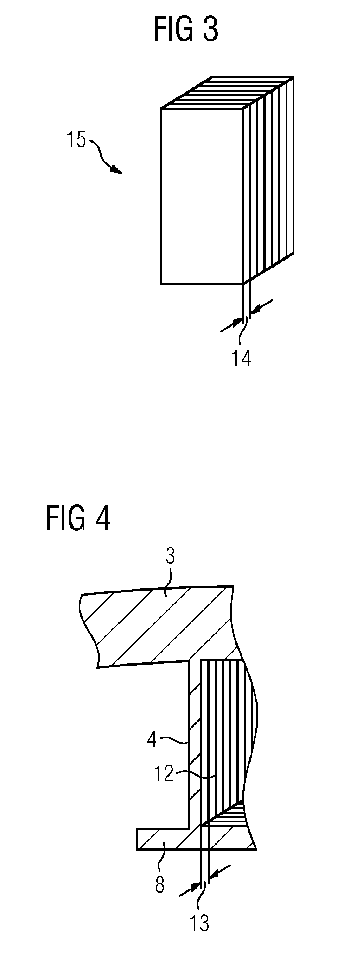

FIG 3 zeigt den Einsatz 15, wobei dieser Einsatz 15 geblecht ausgeführt ist und eine Blechdicke 14 des Einsatzes 15 aufweist.

FIG 4 zeigt einen Blechschnitt gemäß FIG 2 nur ohne Einsatz 15, wobei in diesem Teil die Blechdicke 13 dargestellt ist, die sich von der Blechdicke 14 des Einsatzes 15 unterscheidet. Die Blechdicke 14 des Einsatzes 15 ist kleiner als die Blechdicke 13. Dies reduziert weiter die Wirbelströme und Verknüpfungen zwischen den unterschiedlichen Materialien.

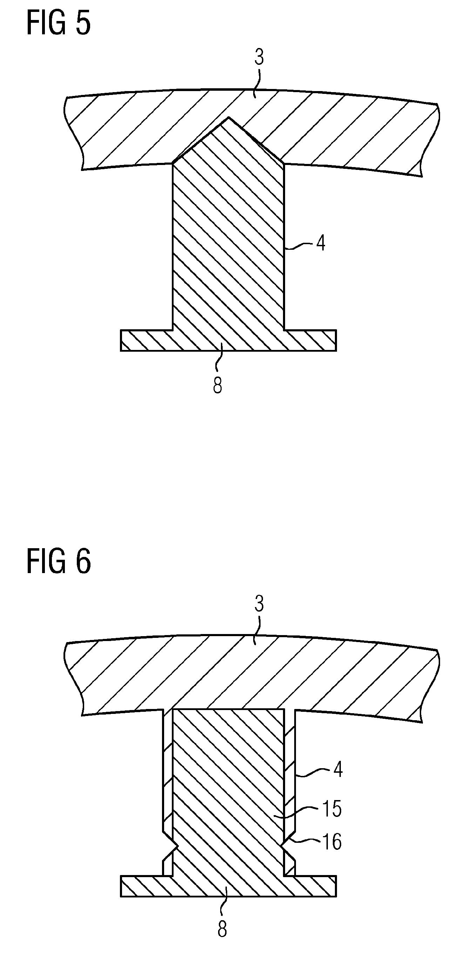

In einer weiteren Ausführungsform gemäß FIG 5 kann ein Zahn 4 auch komplett mit dem hochpermeablen Material vergleichsweise guter magnetischer Leitfähigkeit ausgeführt sein. Dabei reicht der Zahn 4 radial in das Joch 3 des Stators 2. Der Zahn 4 wird dabei durch nicht näher dargestellte schwalbenschwanzähnliche Verbindungsarten im Joch 3 fixiert. Ebenso kann der Zahn 4 auch in das Joch 3 durch einen vorzugsweise elektromagnetisch leitfähigen Kleber eingeklebt sein.

Um auch eine radiale Halterung des Einsatzes 15 im Zahnschaft 9 zu gewährleisten, kann auch eine Verjüngung des Zahnschaftes 9 im Bereich des Zahnkopfes 8 vorgenommen werden, um das magnetisch gut leitfähige Material im Zahnschaft 9 im Joch zu positionieren und/oder zu fixieren.

Ebenso kann gemäß FIG 6 die Ausnehmung in Richtung Luftspalt 7 offen ausgeführt sein, um so den in diesem Fall T-förmigen Einsatz 15 aufzunehmen. Eine prinzipiell dargestellte Einkerbung 16 in den Seitenwänden des Zahnes 4 fixiert und positioniert dabei den Einsatz 15. Der Einsatz 15 weist somit auch im Zahnkopf 8 ein hochpermeables Material mit vergleichsweise guter magnetischer Leitfähigkeit auf.

Auch bei den Ausführungen gemäß FIG 5 oder FIG 6 kann die Blechdicke 13, 14 gleich oder unterschiedlich ausgeführt sein.

Durch die erfindungsgemäße Ausgestaltung eines Stators 2 unabhängig von seiner Bauform, d.h. Radialfluss oder Transversalflussmaschine bzw. rotatorische dynamoelektrische Maschine oder lineare dynamoelektrische Maschine, lässt sich eine vergleichsweise hohe Leistungsdichte erreichen und dadurch bei der dynamoelektrischen Maschine 1 mehr Drehmoment pro Strom und damit ein verbesserter Wirkungsgrad gegenüber herkömmlichen Maschinen erreichen.

Die Nuten 6 können dabei nunmehr in ihrem Querschnitt größer gewählt werden, um damit eventuell mehr Raum für Isolierteile damit eine höhere Spannung des Wicklungssystems zu erhalten oder um diesen Raum zusätzlich für Kühlung oder für erhöhte Kupferquerschnitte auszunutzen.

Ein derartiger Stator 2 wird vor allem bei hoch ausgenutzten dynamoelektrischen Maschinen eingesetzt, um bei vergleichsweise geringem Gewicht eine hohe Leistungsdichte bereitstellen zu können. Die ist u.a. bei elektrischen Antrieben in der Verkehrstechnik bei Schienenfahrzeugen, E-Cars, aber auch vor allem aber bei Flugzeugen sehr wichtig.

Ebenso werden derartige dynamoelektrische Maschinen in der Werkzeugmaschinentechnik, als auch als Antrieb bei Pumpen und Kompressoren eingesetzt.

## Patentansprüche

1. Elektromagnetischer Pfad eines Stators (2) einer dynamoelektrischen Maschine mit zumindest einem Statorzahn (4) und einem Statorjoch (3) mit Abschnitten unterschiedlicher magnetischer Leitfähigkeit.

2. Elektromagnetischer Pfad eines Stators (2) nach Anspruch 1, **dadurch gekennzeichnet, dass** der Statorzahn (4) oder zumindest ein Abschnitt des Statorzahns (4) eine unterschiedliche magnetische Leitfähigkeit zu dem Material des Statorjochs (3) aufweist.

3. Elektromagnetischer Pfad eines Stators (2) nach Anspruch 2, **dadurch gekennzeichnet, dass** der Statorzahn (4) zumindest eine Ausnehmung (12) aufweist, die Material hoher magnetischer Leitfähigkeit aufweist.

4. Elektromagnetischer Pfad eines Stators (2) nach einem der vorhergehenden Ansprüche, **dadurch gekennzeichnet, dass** die Materialien unterschiedlicher magnetischer Leitfähigkeit unterschiedliche Materialdicken aufweisen.

5. Elektromagnetischer Pfad eines Stators (2) nach einem der vorhergehenden Ansprüche, **dadurch gekennzeichnet, dass** der Statorzahn (4) geblecht und das Statorjoch (3) einstückig gesintert ausgeführt ist.

6. Dynamoelektrische Maschine mit zumindest einem Stator (2) nach einem der vorhergehenden Ansprüche.

7. Transportmittel mit zumindest einer dynamoelektrischen Maschine nach Anspruch 6.

8. Transportmittel nach Anspruch 7, **dadurch g e - kennzeichnet,** dass das Transportmittel als Schienenfahrzeug oder E-Plane ausgeführt ist.
